# EUROPEAN PATENT APPLICATION

(11) **EP 2 000 869 A1**
(43) Date of publication of application: **10.12.2008**
(21) Application number: 07108988.2
(22) Date of filing: 25.05.2007
(51) Int. Cl.: G05B 19/4065, G05B 19/401, B23Q 17/24, B25J 9/16

(54) **System and method for measuring machining tools with a camera**

(71) Applicant: GENERAL ELECTRIC COMPANY, Schenectady, NY 12345 (US)
(72) Inventor: Hoffman, James Joseph, Cincinnati, OH 45211 (US); Louder, Douglas Scott, Cincinnati, OH 45241 (US); Heitzman, Timothy Mark, Maineville, OH 45039 (US); Randolph, Jr., James Edward, Mason, OH 45040 (US)
(74) Representative: Bedford, Grant Richard

(57) **Abstract**

A system (10) which broadly comprises: (a) an NC machine (18) having at least one machining tool (26); (b) a smart image acquisition device (34) that measures (44) at least one characteristic of the machining tool (26) to generate acquired data (46) from the measured machining tool (26); (c) optionally a machining tool program (36) that uses the acquired data (46) to control the operational use (50) of the measured machining tool (26) by the NC machine (18) or to determine the operational condition (50) of the measured machining tool (26) or the NC machine (18). Also disclosed is a method which broadly comprises the following steps: (a) providing a machining tool (26) from an NC machining operation (302-304); (b) measuring at least one characteristic of the machining tool (26) with a smart image acquisition device (34) to generate acquired data (46) from the measured machining tool (26) (306-310); (c) optionally using the acquired data (46) to control the operational use (50) of the measured machining tool (26) by the NC machining operation or to determine the operational condition (50) of measured machining tool or NC machine (312-320).

## Description

This invention broadly relates to a system and method for measuring at least one characteristic of a machining tool in a numerically controlled (NC) machine or machining operation using a smart image acquisition device. This invention further broadly relates to a system and method for using the acquired data generated by the smart image acquisition device to control the operational use of the measured machining tool by the NC machine, or to determine the operational condition of the measured machining tool or NC machine.

Automatic numerical controlled machines are used to perform a variety of machining operations, such as milling, boring, drilling, reaming, honing, and threading. For each such operation, the exact location, amount of material to be removed, finished dimension, diameter and depth of holes to be machined, etc., are predetermined and translated into a numerical program or code which is stored on magnetic tape, perforated tape, cards, other data storage device (e.g., computer hard disk), etc. The machine is thus "numerically controlled" (NC) to perform many machining operations automatically without the requirement for human operators in constant attendance. See, for example, U.S. Pat. No. 4,151,642 (Holland et al.), issued May 1, 1979; commonly assigned U.S. Pat. No. 4,382,215 (Barlow et al.), issued May 3, 1983; commonly assigned U.S. Pat. No. 4,816,729 (Carlson), issued March 28, 1989; and commonly assigned U.S. Pat. No. 5,189,624 (Barlow et al.), issued February 23, 1993, for some illustrative NC machines and systems.

Although cutting or other removal of material occurs automatically in NC machining systems, numerous manual operations may still be required, primarily for measuring the machined dimensions, for making cutter adjustments using an ordinary numerical control cutter offset, etc. For example, manual measurements and adjustments of the cutting tool may be necessary to take into account a large number of variables, such as wear of the cutting tool, repositioning and/or replacement of the cutting tool, as well as dimensional changes of the cutting tool, the work piece or the machine itself due to such factors as heating, deflection under load, etc.

In a typical operation carried out with an NC machining tool such as a cutting tool, certain adjustments (e.g., tool offsets) may need to be manually implemented by the operator after the machine is set up for the manufacture of a particular work piece or part. Prior to the start of the machining operation, the operator may need to advance the cutting tool to a tool setting surface and determine the tool position by manually measuring the space between the tool and the reference surface. This is may done with a piece of shim material, or the like and such measurements may then form the basis for manually making tool offsets. Where the machining tool includes a tool mechanism such as a multiple tool turret, this operation may need to be carried out separately for each tool, as well as for each of the axes (of motion) of the machine. Prior to making the final or finishing cut for a particular work piece surface, the various dimensions of the semi-finished work piece surface may need to be measured by using a hand-held gauge. This enables the operator to determine the required offset of the cutting tool which is used for the finishing cut. After the finishing cut is made, the work piece may need to be checked again with the hand-held gauge in order to measure the conformance of the actual dimensions of the finished surface to the desired dimensions.

Many NC machining operations may also require dimensional information about the machining tool, for example, the particular gauge length of a cutting tool, to be entered into the NC machining control. The gauge length may be manually measured prior to loading of the machining tool and manually entered into the NC machining control. Manual measurement operations are individually very time-consuming and take up a significant amount of the total time required to machine a particular work piece to the desired dimensions, thus limiting the manufacturing capacity of the machining tool. Any reduction of the capacity of the machining tool becomes a matter of economic significance because of the costs associated with NC machining systems.

In addition, all such manual operations are prone to introduce errors into the manufacturing process. Instead of using manual measurements, the relevant characteristic of the machining tool, for example the gauge length of a cutting tool, may be measured on the NC machine using a tool probe. See U.S. Pat. No. 4,151,642 (Holland et al.), issued May 1, 1979, which discloses a tool probe assembly for measuring the dimensions of a machining tool. In addition to gauge length, other dimensional characteristics of the cutting tool, such as the diameter, corner radius, etc., may also be measured by a tool probe to ensure that the correct tool has been loaded by the NC machine. Tool probing may be performed under the control of the NC machine controller and thus comprise part of the NC machine system. Probing tools on the NC machine tend to be more accurate and less prone to error for identifying correct gauge lengths when compared to manual methods. Even so, tool probing is still a relatively slow process for gauging the length and other characteristics of a machining tool, such as a cutting tool. See also commonly assigned U.S. Pat. No. 4,571,841 (Campbell), issued February 25, 1986 and U.S. Pat. No. 4,592,146 (Campbell), issued June 3, 1986, for other pre-gauging devices for cutting tools.

Accordingly, it would be desirable to provide a system and method for machining tools, such as cutting tools, of an NC machine that has the ability to: (1) measure the relevant characteristics of the machining tool, such as gauge length, etc., more quickly than manual methods or conventional tool probes; (2) with a degree of accuracy at least comparable to that of conventional tool probes; as well as (3) to determine (e.g., verify) from such measurements: (a) whether the machining tool is appropriate or correct for the machining operation to be performed; (b) the appropriateness of other operational uses of the machining tool; (c) how the operational uses of the machining tool should be controlled; or (d) what the operational condition of the machining tool and/or NC machine is.

An embodiment of this invention is broadly directed at a system comprising:
an NC machine having at least one machining tool; and
a smart image acquisition device that measures at least one relevant characteristic of the machining tool to provide acquired data on the measured machining tool.

Another embodiment of this invention is broadly directed at a system comprising:
an NC machine having at least one machining tool;
a smart image acquisition device that measures at least one relevant characteristic of the machining tool to provide acquired data on the measured machining tool; and
a machining tool program that uses the acquired data to control the operational use of the measured machining tool by the NC machine or to determine the operational condition of the measured machining tool or the NC machine.

Another embodiment of this invention is broadly directed at a method comprising the following steps:
(a) providing a machining tool from an NC machining operation; and
(b) measuring at least one relevant characteristic of the machining tool with a smart image acquisition device to provide acquired data from the measured machining tool.

Another embodiment of this invention is broadly directed at a method comprising the following steps:
(a) providing a machining tool from an NC machining operation;
(b) measuring at least one relevant characteristic of the machining tool with a smart image acquisition device to provide acquired data on the measured machining tool; and
(c) using the acquired data to control the operational use of the measured machining tool by the NC machining operation or to determine the operational condition of measured machining tool or NC machine.

Various embodiments of the present invention will now be described in connection with the accompanying drawings, in which:
FIG. 1 is a schematic diagram of a system comprising an NC machine having, for example, a cutting tool and a smart image acquisition device for measuring at least one relevant characteristic of the cutting tool.
FIG. 2 is side view of an embodiment of a cutting tool from FIG. 1 in the form of a mill cutting tool, fitting within the field of view of a smart image acquisition device, to illustrate the various relevant characteristics of the tool that may be measured by the smart image acquisition device.
FIG. 3 is another side view of the cutting tool of FIG. 2 to further illustrate relevant characteristics of the tool that may be measured by the smart image acquisition device.
FIG. 4 is a side view of another cutting tool that may be used in the NC machine system of FIG. 1 in the form of a chamfered end mill, illustrating various relevant characteristics of the chamfered end mill that may be measured by the smart image acquisition device.
FIG. 5 is another side view of the mill cutting tool of FIGS. 2-3, but illustrating relevant characteristics of the tool that may be measured by a smart image acquisition device when only a portion of the tool fits within the field of view of the smart image acquisition device.
FIG. 6 represents a flow diagram of an embodiment of the system/method of this invention for verifying whether or not the machining tool shown in FIG. 1 is the correct machining tool for the NC machine to use.
FIG. 7 is a side view of a smart image acquisition device that may be used to measure characteristics of a machining tool.
FIG. 8 is a perspective view of the smart image acquisition device of FIG. 7.
FIG. 9 is a top plan view of the smart image acquisition device of FIG. 7.

As used herein, the term "numerically controlled machine" or "NC machine" refers to a machine that carries out one or machining operations with one or more machining tools where the machining operation(s) to be performed is predetermined and translated into a numerical code, computer instructions, etc., which may be stored on magnetic tape, perforated tape, computer cards, computer software, computer hardware, etc. Illustrative examples of NC machines are disclosed, for example, in U.S. Pat. No. 4,151,642 (Holland et al.) issued May 1, 1979; commonly assigned U.S. Pat. No. 4,382,215 (Barlow et al.), issued May 3, 1983; commonly assigned U.S. Pat. No. 4,816,729 (Carlson), issued March 28, 1989; and commonly assigned U.S. Pat. No. 5,189,624 (Barlow et al.), issued February 23, 1993, the relevant disclosures of which are incorporated herein by reference.

As used herein, the term "NC machine controller" refers to that component or portion of the NC machine that controls the operation of the NC machine.

As used herein, the term "machining tool" refers to any tool used by a NC machine to carrying out a machining operation. Some examples of machining tools include but are not limited to, mills (e.g., cutting mills, end mills, etc.), reamers, drills, bores, honing devices, threading devices, lathes, etc.

As used herein, the term "measured machining tool" refers to a machining tool measured by a smart image acquisition device.

As used herein, the term "transaction" refers to a request transmitted to a smart image acquisition device as to which characteristics and measurements of the machining tool are to be obtained. A transaction may also include an identification number (ID), known characteristics of the tool, how the tool is to be positioned and/or oriented for measuring characteristics, etc.

As used herein, the term "characteristic" refers to any parameter, quality, shape, configuration, design, size, length, width, thickness, height, composition, property, structure, feature, attribute, arrangement, order, orientation, etc., or any combination thereof of a machining tool that may be measured by a smart image acquisition device.

As used herein, the term "relevant characteristic" refers to any characteristic measured by a smart image acquisition device that may be used to control the operational use of a machining tool, or may be used to determine the operational condition of a machining tool or NC machine.

As used herein, the term "smart image acquisition device" refers to a device that is capable of taking, obtaining, acquiring, generating, etc., an image of a machining tool being measured and optionally converting that image into a format (e.g., digital format) such that measurement data that is taken, obtained, acquired, generated, etc. by the smart image acquisition device may be evaluated, for example, by a machining tool program. Suitable smart image acquisition devices include, but are not limited to smart cameras, etc.

As used herein, the term "data" refers to any information, image, etc., taken, acquired, obtained, generated, etc., by measuring one or more characteristics of a machining tool by using a smart image acquisition device.

As used herein, the term "acquired data" refers to any relevant characteristic taken, generated, obtained, etc., by a smart image acquisition device (e.g., smart camera) from those portions of the measured machining tool in the field of view of the smart image acquisition device that may be transmitted to a machining tool program.

As used herein, the term "using acquired data" refers to evaluating, assessing, manipulating, transforming, converting, employing, etc., the acquired data that is transmitted to a machining tool program.

As used herein, the term "machining tool program" refers to computer software used in controlling the operational use of a machining tool by the NC machine, or determining the operation conditional of a machining tool or NC machine.

As used herein, the term "operational use" refers to any machining operation that may be performed by the machining tool and that may be controlled by a machining tool program.

As used herein, the term "control operational use" includes but is not limited to regulating, monitoring, limiting, restricting, increasing, decreasing, changing, etc., the degree, manner, type, etc., of a machining operation performed by a machining tool, including not using the machining tool or stopping use of the machining tool.

As used herein, the term "operational condition" refers to the state, condition, readiness, etc., of a machining tool, NC machine, or both for performing a machining operation.

As used herein, the term "verify" refers to determining, confirming, validating, substantiating, corroborating, etc., from acquired data whether or not a measured machining tool is ready or appropriate (e.g., the correct tool) for operational use, or whether or not the measured machining tool or NC machine is in operational condition.

As used herein, the term "correct machining tool" refers to a measured machining tool that has been verified from acquired data to be the appropriate, proper, suitable, etc., machining tool for operational use by the NC machine or machining system.

As used herein, the terms "gauge length" and "gage length" are used interchangeably herein to refer to a measurement of a linear dimension of a machining tool, for example, a length measured from the mechanical interface of the tool assembly to the control point on the tool, etc.

As used herein, the term "runout" refers to the amount of wobble, warp, etc., that occurs as a machining tool (e.g., a drill, reamer, end mill, etc.) revolves, rotates, spins, etc.

As used herein, the term "machining operation" refers to an action, function, etc., carried out by a machining tool. Machining operations that may be carried out by a machining tool include, but are not limited to one or more of: drilling, boring, milling, grinding, reaming, cutting, lathing, finishing, fabricating, assembling, shaping, etc.

As used herein, the term "machining step" refers to any procedure, process, practice, etc., carried out by a machining tool. Machining steps include, but are not limited to one or more of: drilling, boring, milling, grinding, reaming, cutting, lathing, finishing, fabricating, assembling, shaping, etc.

As used herein, the term "machining system" refers to a system comprising one or more machining operations.

As used herein, the term "machining method" refers a method comprising one or more machining steps.

As used herein, the term "machining station" refers to a given point, place, position, etc., in the machining system where one or more machining operations may be carried out.

As used herein, the terms "transmission," "transmitting", "transmit" and the like refer to any type, manner, etc. of providing, supplying, inputting or otherwise transmitting data. Transmission of data herein may be carried out electronically, including the use of wired electronic methods, wireless electronic methods or combinations thereof. Electronic transmissions may be carried out by a variety of local or remote electronic transmission methods, such as by using Local or Wide Area Network (LAN or WAN)-based, Internet-based, or web-based transmission methods, cable television or wireless telecommunications networks, or any other suitable local or remote transmission method.

As used herein, the term "computer" may refer to a personal computer (portable or desktop), server, mainframe computer, etc.

As used herein, the term "software" refers to any form of programmed machine-readable language or instructions (e.g., object code) that, when loaded or otherwise installed, provides operating instructions to a machine capable of reading those instructions, such as a computer or other computer program reader.

As used herein, the term "comprising" means various operations, steps, data, stations, tools, devices, etc., can be conjointly employed in this invention. Accordingly, the term "comprising" encompasses the more restrictive terms "consisting essentially of" and "consisting of."

An embodiment of the system of this invention broadly comprises: (a) an NC machine having at least one machining tool; (b) a smart image acquisition device that measures at least one relevant characteristic of the machining tool to provide acquired data on the measured machining tool; (c) optionally a machining tool program that uses the acquired data to control the operational use of the measured machining tool by the NC machine or to determine the operational condition of the measured machining tool or the NC machine.

An embodiment of the method of this invention broadly comprises: (a) providing a machining tool from an NC machining operation; (b) measuring at least one relevant characteristic of the machining tool with a smart image acquisition device to provide acquired data on the measured machining tool; (c) optionally using the acquired data to control the operational use of the measured machining tool by the NC machining operation or to determine the operational condition of measured machining tool or NC machine.

The embodiments of the system and method of this invention are based on the discovery that smart image acquisition devices (e.g., smart cameras) may be used to: (1) measure at least one relevant tool characteristic of a machining tool (e.g., gauge length of a cutting tool) more quickly than manual methods or tool probes; (2) measure the relevant tool characteristic(s) with a degree of accuracy at least comparable to conventional tool probes; (3) provide acquired data on the measured machining tool that may be used to: (a) control the operational use of the measured machining tool by the NC machine (e.g., whether or not the measured machining tool is the correct machining tool to select for use in the NC machine or machining operation), or (b) determine the operational condition of the machining tool or NC machine.

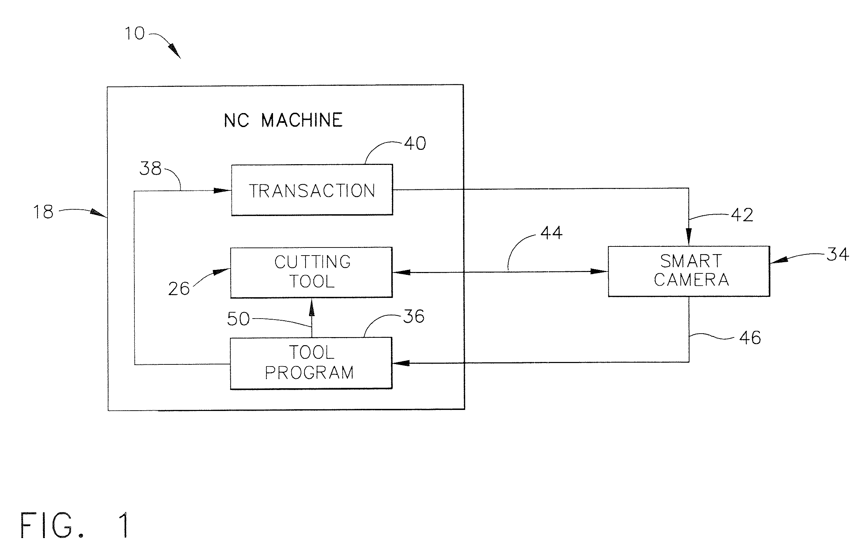

A schematic diagram of a specific embodiment of a system comprising an NC machine having a machining tool, for example, a cutting tool, that uses as smart image acquisition device, for example, a smart camera, to measure the relevant characteristics of the machining tool for controlling the operational use of the cutting tool (e.g., to verify the selection of the correct tool) is further illustrated by reference to FIG. 1 of the drawings, as described hereafter. FIG. 1 shows a system, generally indicated as 10, that comprises an NC machine, generally represented by a square indicated as 18. Machine 18 is shown as having a machining tool, for example, a cutting tool, indicated generally by rectangle 26. As further shown by FIG. 1, system 10 further comprises a smart image acquisition device, for example, a smart camera, as generally indicated by rectangle 34.

As shown in FIG. 1, a machining tool program, indicated by rectangle 36, may be provided, which is shown as being part of machine 18 but which may also be separate therefrom. Tool program 36 initiates, as indicated by arrow 38, a transaction, which is indicated by rectangle 40. Transaction 40 may contain the characteristics and measurements to be obtained from tool 26, the known characteristics of tool 26, etc. For example, transaction 40 may include, or may not include, the identity of tool 26. To minimize the amount and complexity of programming of tool program 36, and to make tool program 36 more generally applicable to a variety of tools 26, it may be desirable that transaction 40 not include the identity of tool 26.

Transaction 40 is transmitted by system 10, as indicated by arrow 42, to smart camera 34. In response to transaction 40, smart camera 34 obtains one or more images of one or more relevant characteristics of tool 26, as indicated by double headed arrow 44. These transmitted images 44 are often converted by smart camera 34 into digital measurements. Image(s)/measurement(s) 44 obtained by smart camera 34 provide acquired data that is transmitted, as indicated by arrow 46, to a machining tool program 36. Tool program 36 then uses the acquired data 46 that is received, as indicated by arrow 50, to control the operational use of tool 26 by machine 18 (e.g., providing instructions to the NC machine controller), for example, to determine whether or not tool 26 is the correct tool for use by machine 18, whether tool 26 and/or machine 18 are in operational condition, etc.

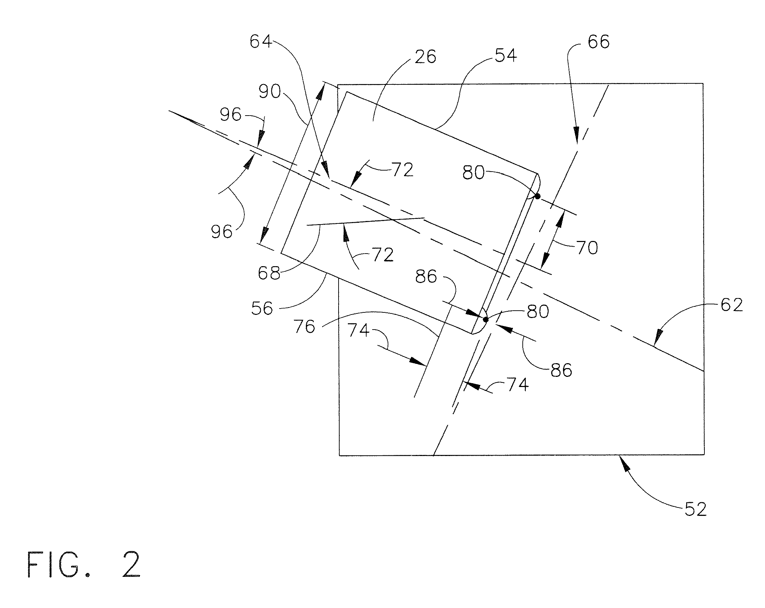

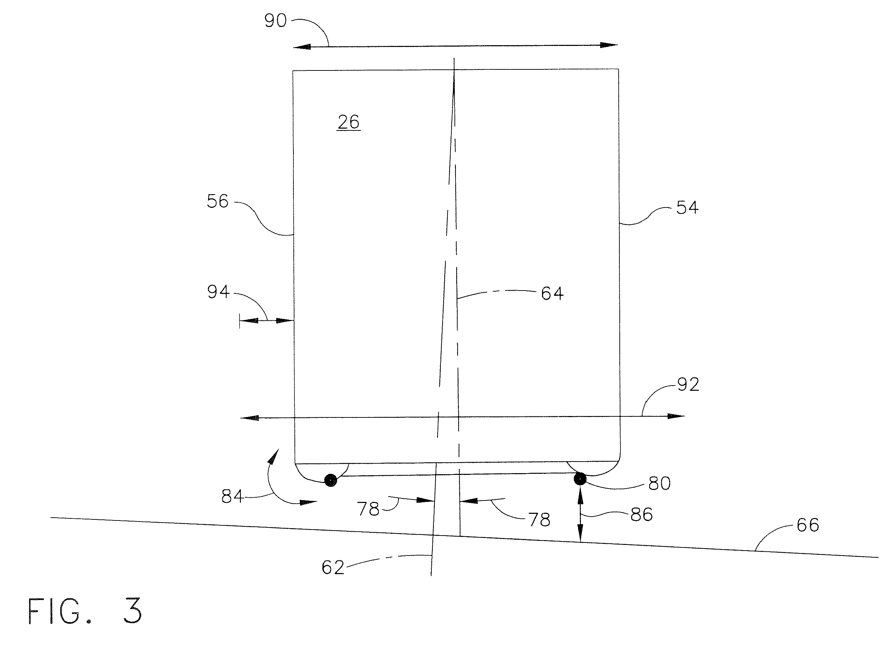

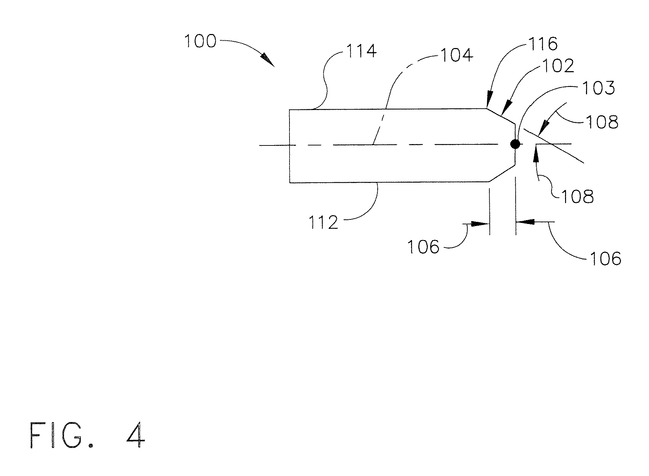

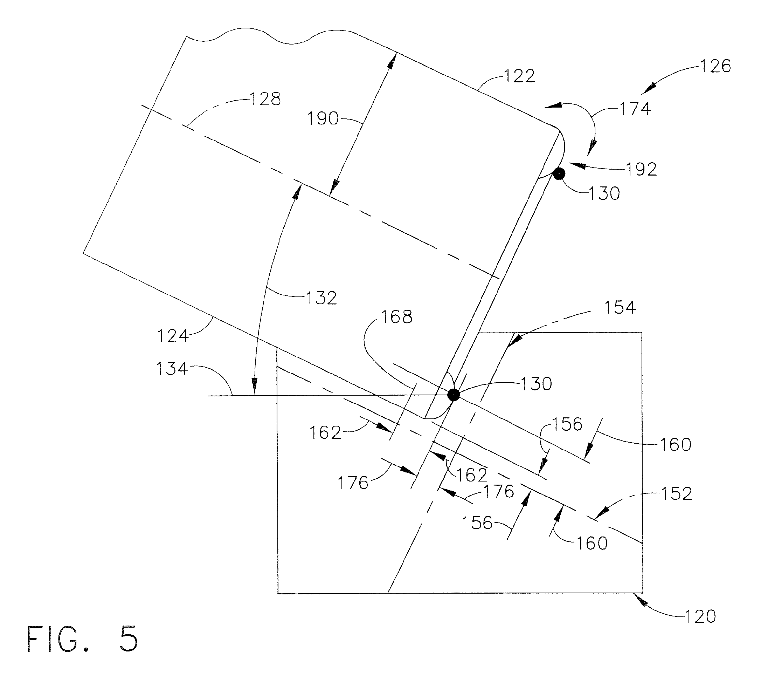

FIGS. 2-5 illustrate various relevant characteristics of different tools 26 that may be measured by smart camera 34 to provide acquired data 46, when tool 26 is fully within the field of view, indicated as 52, of smart camera 34 (FIGS. 2-4), or when tool 26 is only partially within the field of view of smart camera (FIG. 5), embodiments of which will discussed hereafter in further detail. Briefly, FIGS. 2-3 show a tool 26 in the form of, for example, a mill cutting tool having a top side 54 (as shown in field of view 52) and a bottom side 56 (as shown in field of view 52), and provided with a tool axis target plane 62, a tool center of rotation or tool axis 64 (indicated by a broken line), a length target plane 66, a horizontal line 68, a control point distance 70 (indicated by a double headed arrow), an angle of presentation 72 (indicated by a pair of curved arrows), a diameter distance 74 (indicated by a pair of arrows), an effective radius plane 76, a tool axis location deviation 78 (indicated by a pair of arrows in FIG. 3), a pair of control points 80, a corner radius 84 (indicated by a curved double headed arrow), a length offset 86 (indicated by a double headed arrow), a tool diameter 90 (indicated by a double headed arrow in FIG. 2 or in FIG. 3), an effective diameter 92 (indicated by a double headed arrow in FIG. 3), tool run out 94 (indicated by a double headed arrow in FIG. 3), and a tool deviation angle 96 (indicated by a pair of arrows). Briefly, FIG. 4 illustrates a tool 26 in the form of, for example, an end mill 100, and provided with an angle tip surface 102, a control point 103, a tool axis 104 (indicated by a broken line), a tip angle length 106 (indicated by a pair of arrows), a tip angle 108 (indicated by a pair of curved arrows), a bottom tool side 112, top tool side 114, and a point 116 where one end of angle tip surface 102 intersects one end of top side 114. Briefly, FIG. 5 illustrates a mill cutting tool 26 as shown in FIGS. 2-3 but partially within the field of view, indicated as 120, with a top side 122 (as shown in field of view 120) and a bottom side 124 (as shown in field of view 120) for the tool (hereafter referred to as 126), and provided with a tool axis 128 (indicated by a broken line), a pair of control points 130, an angle of presentation 132 (indicated by a curved double headed arrow), a horizontal line 134, a tool radius target plane 152 (indicated by a broken line), a length target plane 154, a radial deviation 156 (indicated by a pair of arrows), a control point distance 160 (indicated by a pair of arrows), a radius distance 162 (indicated by a pair of arrows), an effective radius plane 168, a corner radius 174 (indicated by a curved double headed arrow), a length offset 176 (indicated by a pair of arrows), an actual radius 190 (indicated by a double headed arrow), and a corner radius tip 192. The positioning of control points, such as 80 and 130, depend on the type of tool 26/100/126, and may vary depending upon the gauge length of tool 26/100/126. The various target planes shown, such as tool axis target plane 62 and length target plane 66 in FIG. 2, and tool radius target plane 152 and length target plane 154 in FIG. 5, are typically relative or with reference to the tool axis (not shown) of NC machine 18.

Referring to FIG. 2, tool 26 may be placed within field of view 52 (shown as a square) of smart camera 34. As further shown in FIG. 2, the entire width of tool 26 may be placed within field of view 52. The measurements of the relevant characteristics obtained by smart camera 34 provide acquired data 46 that may then be transmitted by smart camera 34 to machining tool program 36 for further use (e.g., evaluation, manipulation, assessment, etc.) in the operation of tool 26 and machine 18. For example, machining tool program 36 may use acquired data 46 to change the positioning and/or orientation of tool 26, to determine whether tool 26 is mounted correctly on machine 18, to determine whether the positioning and/or orientation of tool 26 is correct (and if not, change the positioning and/or orientation), to verify whether tool 26 is the correct tool for the machining operation to be performed, to determine the operational condition of tool 26 and machine 18 (e.g., whether maintenance or repair may be required or necessary because of incorrect positioning or orientation of tool 26 by machine 18, excessive wear of tool 26 that is discovered, etc.), etc.

Tool 26 may be positioned and/or oriented within field of view 52 prior to a request (e.g., transaction 40) from system 10 to determine the position and/or orientation of tool 26. Each tool 26 may have one or more control points 80, two of which shown in

FIGS. 2 and 3, that may be used as a reference point to assist in using (e.g., evaluating) the acquired data 46. For example, as shown in FIG. 2, tool control point(s) 80 may be positioned or placed on or adjacent to length target plane 66 that bisects the field of view 52. Tool axis 64 may also be positioned above tool axis target plane 62 which is shown as being perpendicular to length target plane 66, thus also bisecting field of view 52. If tool 26 is presented horizontally, control point(s) 80 may be positioned to a vertical plane that machine 18 believes may place control point(s) 80 on length target plane 66, thus bisecting field of view 52, while tool axis 64 may be centered on a horizontal plane that machine 18 believes may place tool axis 64 on tool axis target plane 62. Once tool 26 is positioned and oriented in field of view 52, system 10 may request measurements from smart camera 34 of tool 26 (using control point(s) 80, tool axis target plane 62, length target plane 66, etc., as reference points) to provide acquired data 46 that may include, but is not limited to, the length offset 86 from nominal, the effective diameter 92, the corner radius 84, the tip angle 108, the actual tool diameter 90, runout 94 (i.e., the difference between the effective diameter 92 and the actual tool diameter 90), etc., of tool 26 or end mill 100, as discussed in detail hereafter.

Once tool 26 is positioned, a transaction 40 (which may include a transaction ID number, known tool characteristics, how tool 26 is to be positioned or oriented for measuring characteristics, identity of tool 26, etc.) may be transmitted (as indicated by arrow 42) by system 10 to smart camera 34 as to which characteristics and measurements are to be obtained of tool 26 by smart camera 34. The resulting measurements obtained by smart camera 34 are then transmitted as acquired data 46 to machining tool program 36. Tool program 36 uses acquired data 46 to control the operation of tool 26 by machine 18, or to determine the condition of tool 26 and/or machine 18. For example, tool program 36 may evaluate the measurements obtained by smart camera 34 and from that evaluation, determine, for example, whether or not tool 26 is the correct tool to use (e.g., whether effective diameter of 26 tool is acceptable and within tolerance), whether tool 26 is mounted correctly by machine 18, whether tool 26 is positioned and/or oriented correctly for use (and how to update or adjust the positioning and/or orientation of tool 26 if it is not), whether the incorrect positioning and/or orienting of tool 26 indicates or suggests machine 18 requires maintenance or repair, etc.

In an embodiment of a measurement of all or most of the relevant characteristics of tool 26 (as illustrated by FIGS. 2-4), system 10 may transmit a "full tool measurement" transaction 40 (referred to hereafter as "ID 01") to smart camera 34. ID 01 may include the angle of presentation 72 (double headed arrow) so that smart camera 34 may know the angle of tool 26 that is being presented in field of view 52 to smart camera 34. ID 01 may also include: (a) the control point distance (i.e., the perpendicular radial distance from tool axis 64 to the location of control point 80 as measured along length target plane 66), as indicated by 70 in FIG. 3, which may range from 0 to 100% of the radius of tool 26, and which may be represented in the format of, for example, inches (mm); and (b) the diameter distance 74 (i.e., the axial distance, parallel to tool axis 64, from control point 80 to effective radius plane 76), which may range from 0 to half field of view 52, and which may be represented in the format of, for example, inches (mm).

As illustrated in FIG. 3, corner radius 84 may be used as an indication of other measurements to be performed. A value for each such measurement to be performed may be used, such as the following:
0. Do not measure the corner radius 84 (see FIG. 3) or tip angle 108 (see FIG. 4).
1. Measure the corner radius 84 and return that measurement.
2. If applicable (see end mill 100 of FIG. 4), measure tip angle 108 and tip angle length 106.

From the above measurements, smart camera 34 may provide the following acquired data 46, as illustrated in FIG. 3:
1. The length offset 86 (i.e., the measured distance from control point 80 to length target plane 66), with the format of acquired data 46 being transmitted to tool program 36, for example, as inches (mm).
2. The effective diameter 92 (i.e., the largest measured diameter of a spinning tool that includes the actual tool diameter 90, as well as runout 94), with the format of acquired data 46 being transmitted to tool program 36, for example, as inches (mm).
3. The corner radius 84 (i.e., the radius of the corner between the end or tip of tool 26 and side 56 of tool 26), with the format of acquired data 46 being transmitted to tool program 36, for example, as inches (mm).
4. The tool axis location deviation 78 (i.e., the distance between cutting tool axis 64 and tool axis target plane 62) which may be measured on the plane of control point 80 of tool 26, with the format of acquired data 46 being transmitted to tool program 36, for example, as inches (mm).
5. The tool axis deviation angle 96 (i.e., the angle between tool axis 64 and tool axis target plane 62), with the format of acquired data 46 being transmitted to tool program 36, for example, as degrees.
6. The tip angle 108, for example, as illustrated in FIG. 4, (i.e., the angle formed by angled tip surface 102 and tool axis 104), with the format of acquired data 46 being transmitted to tool program 36, for example, as degrees.
7. The tip angle length 106 (i.e., the axial length from control point 103 to intersection point 116 where the angled surface 102 intersects with tool side 114 of end mill 100), with the format of acquired data 46 being transmitted to tool program 36, for example, as inches (mm).
8. The actual tool diameter 90 (i.e., the measured diameter of tool 26 and not including runout 94), with the format of acquired data 46 being transmitted to tool program 36, for example, as inches (mm).
9. Measured tool runout 94 (i.e., the difference between effective diameter 92 and the actual tool diameter 90), with the format of acquired data 46 being transmitted to tool program 36, for example, as inches (mm).
   If no errors have been detected, system 10 may be set to reflect an error code of 0. When errors are found by system 10, these discovered errors may be listed along with their associated codes, with any unused characteristics that may not have valid values being returned with a value of 0.
   In an embodiment illustrating "length only" tool measurements, again for a tool 26 wherein the length fits completely within field of view 52, system 10 may transmit a "length only tool measurement" transaction 40 (referred to hereafter as "ID 02") to smart camera 34. ID 02 may include the following known characteristics of tool 26 that are transmitted to smart camera 34:
10. The angle of presentation 72 (i.e., the angle formed between tool axis 64 and horizontal line 68) which may vary from -90 to +90 degrees, and may be provided in a format of, for example, degrees.
11. The control point distance 70 (i.e., the perpendicular radial distance from the tool axis 64 to the location of control point 80) which may range from 0 to 100% of the tool radius and may be provided in a format of, for example, inches (mm).
   Using the data provided by transaction ID 02, the following acquired data 46 may be obtained by smart camera 34 from tool 26 and transmitted to tool program 36:
12. The length offset 86 (i.e., the measured distance from control point 80 to length target plane 66, as measured along the plane including control point 80), with the format of acquired data 46 being transmitted to tool program 36, for example, as inches (mm).
13. The tool axis location deviation 78 (i.e., the distance between tool axis 64 and the tool axis target plane 62) which may be measured on a plane that includes control point 80, tool axis 64 and tool axis target plane 62, and wherein the format of acquired data 46 may be transmitted to tool program 36, for example, as inches (mm).
14. The tool axis deviation angle 96 (i.e., the angle between tool axis 64 and tool axis target plane 62), with the format of acquired data 46 being transmitted to tool program 36, for example, as degrees.
   If no errors have been detected, system 10 may be set to reflect an error code of 0. When errors are found by system 10, these discovered errors may be listed along with their associated codes, with any unused characteristics that may not have valid values being returned with a value of 0.
   In an embodiment illustrating width only tool measurements, again for a tool 26 wherein the width fits completely within field of view 52 (as in FIG. 2), system 10 may transmit a "width only tool measurement" transaction 40 (referred to hereafter as "ID 03") to smart camera 34. Transaction ID 03 may include the following checks or characteristics of tool 26 that are transmitted to smart camera 34:
15. The actual tool diameter 90 of tool 26 is checked.
16. The angle of presentation 72 (i.e., so that smart camera 34 may locate or define the location of tool axis target plane 62 and length target plane 66).
   Using the above checks and characteristics provided by transaction ID 03, the following acquired data 46 may be obtained by smart camera 34 from tool 26 and transmitted to tool program 36:
17. The effective diameter 92 (i.e., the largest measured diameter of a spinning tool 26 that includes the actual tool diameter 90 and runout 94), with the format of acquired data 46 being transmitted to tool program 36, for example, as inches (mm).
18. The tool axis location deviation 78 (i.e., the distance from tool axis 64 to tool axis target plane 62 as measured on the plane including control point 80), with the format of acquired data 46 being transmitted to tool program 36, for example, as inches (mm).
19. The tool axis deviation angle 96 (i.e., the angle between tool axis 64 and tool axis target plane 62), with the format of acquired data 46 being transmitted to tool program 36, for example, as degrees.
20. The actual tool diameter 90 (i.e., the measured diameter of tool 26 and not including runout 94), with the format of acquired data 46 being transmitted to tool program 36, for example, as inches (mm).
21. Measured tool runout 94 (i.e., the difference between effective diameter 92 and the actual tool diameter 90), with the format of acquired data 46 being transmitted to tool program 36, for example, as inches (mm).
   If no errors have been detected, system 10 may be set to reflect an error code of 0. When errors are found by system 10, these discovered errors may be listed along with their associated codes with any unused characteristics that may not have valid values being returned with a value of 0.
   When a tool 26 does not fit completely within field of view 52, as illustrated in FIG. 5, data from the portion of the tool (referred to hereafter as 126) within field of view 120 may need to be extrapolated to provide acquired data 46 for the entire tool 126. As shown in FIG. 5, a control point 130 for tool 126 may be placed on length target plane 154 that is perpendicular to tool axis 128. Bottom side 124 of tool 126 may be placed on or parallel to tool radius target plane 152 which is perpendicular to length target plane 154, thus bisecting field of view 120. As with the previously described embodiments for tool 26 illustrated in FIGS. 2-3, tool 126 of FIG. 5 may be positioned and/or oriented prior to transmission of a transaction 40 (referred to hereafter as "ID 04") requesting what characteristics and measurements are to be obtained from tool 126 by smart camera 34. For example, the measurements requested by ID 04 for cutting tool 126 may include the length offset 176 from nominal, the actual tool radius 190, the corner radius 174, etc. The acquired data 46 that may be obtained by transaction ID 04 and transmitted to tool program 36 are as follows:
22. The angle of presentation 132 (i.e., the angle that tool axis 128 makes with a horizontal line 134) which may vary from -90 to +90 degrees, with the format of acquired data 46 being transmitted to tool program 36, for example, as degrees.
23. The control point distance 160 (i.e., the perpendicular radial distance from tool radius target plane 152 to control point 130), which may range from 0 to 50% of field of view 120, with the format of acquired data 46 being transmitted to tool program 36, for example, as inches (mm).
24. The radius distance 162 (i.e., the axial distance, parallel to tool axis 128, from control point 130 to effective radius plane 168) which may range from 0 to half of the field of view, with the format of acquired data 46 being transmitted to tool program 36, for example, as inches (mm).
   The potential measurements for corner radius 174 shown in FIG. 5 may be given the values 0 or 1 as follows:
   0 Do not measure the corner radius 174 or tip angle 108.
   1 Measure the corner radius 174 and return that measurement.
   The identification of the respective tool sides (e.g., top side 122 and bottom side 124) of tool 126 as positioned in field of view 120 may be transmitted with transaction ID 04 to smart camera 34. Values may also be preassigned for the respective tool sides, such as 1 for the bottom side 124, or 2 for top side 122. For the data included in transaction ID 04, smart camera 34 may provide the following acquired data 46, as illustrated in FIG. 5:
25. The length offset 176 (i.e., the measured distance from control point 130 to length target plane 154), with the format of acquired data 46 being transmitted to tool program 36, for example, as inches (mm).
26. The radial deviation 156 (i.e., the distance from bottom side 124 at maximum runout of tool 126 to tool radius target plane 152), with the format of acquired data 46 being transmitted to tool program 36, for example, as inches (mm).
27. The corner radius 174 (i.e., the radius of the corner between tip 192 and top side 122 of tool 126), with the format of acquired data 46 being transmitted to tool program 36, for example, as inches (mm).
28. The tip angle 108 (i.e., the angle formed by the angled tip surface 102 and the tool axis 104) as shown in FIG. 4, with the format of acquired data 46 being transmitted to tool program 36, for example, as degrees.
29. The tip angle length 106 (i.e., the axial length of angled tip surface 102 as shown in FIG. 4 and as it would intersect with, for example, top side 114 at point 116), with the format of acquired data 46 being transmitted to tool program 36, for example, as inches (mm).
   If no errors have been detected, system 10 may be set to reflect an error code of 0. When errors are found by system 10, these discovered errors may be listed along with their associated codes with any unused characteristics that may not have valid values being returned with a value of 0.
   In an embodiment illustrating "length only" tool measurement of tool 126, control point(s) 130 of tool 126 may be placed on the length target plane 154 and the tool radius target plane 152. System 10 may transmit a "length only tool measurement" transaction 40 (referred to hereafter as "ID 05") to smart camera 34. A transaction ID 05 may be assigned to identify the measurements required. Transaction ID 05 may include performing a "length deviation from nominal" by gathering the following data:
30. The angle of presentation 132 (i.e., the angles or positions of tool 126 in relationship to horizontal line 134).
31. The control point distance 160 (i.e., the perpendicular radial distance from tool radius target plane 152 to control point 130) which may range from 0 to 50% of field of view 120, and which may be provided to smart camera 34 in a format of, for example, inches (mm).
   The identification of the respective tool sides (e.g., bottom side 124 or top side 122) of tool 126 as positioned in field of view 120 may be transmitted to smart camera 34 (as described above) as part of transaction ID 05, for example, a value such as 1 for the bottom side 124, or 2 for top side 122. Using the data provided by transaction ID 05, the following acquired data 46 may be obtained by smart camera 34 from tool 26 and transmitted to tool program 36:
32. The length offset 176 (i.e., the measured distance from control point 130 to length target plane 154), with the format of acquired data 46 being transmitted to tool program 36, for example, as inches (mm).
   If no errors have been detected, system 10 may be set to reflect an error code of 0. When errors are found by the system 10, these discovered errors may be listed along with their associated codes with any unused characteristics that may not have valid values being returned with a value of 0.
   Radius measurements may only apply when the width of the tool (e.g., tool 126) do not fit within or inside the field of view (e.g., field of view 120). Bottom side 124 of tool 126 may be placed on, or approximate to, tool radius target plane 152. The radial deviation 156 of tool 126 may be checked where length target plane 154 intersects any part or portion of tool 126 (when tool 126 is also positioned to intersect target plane 154 in field of view 120). System 10 may transmit a transaction 40 (referred to hereafter as "ID 06) to smart camera 34 to perform a measurement of radial deviation 156, using the following characteristics of tool 126 and providing the following measurement of radial deviation 156:
33. The angle of presentation 132 (included in ID 06).
34. The identification of the position of the respective tool sides (e.g., bottom side 124 or top side 122) as positioned in field of view 120 (included in ID 06).
35. The radial deviation 156 (i.e., the distance measured from bottom side 124 at maximum runout of tool 126 to tool radius target plane 152), with the format of acquired data 46 being transmitted to tool program 36, for example, as inches (mm).

If no errors have been detected, system 10 may be set to reflect an error code of 0. When errors are found by system 10, these discovered errors may be listed along with their associated codes with any unused parameters that may not have valid values being returned with a value of 0.

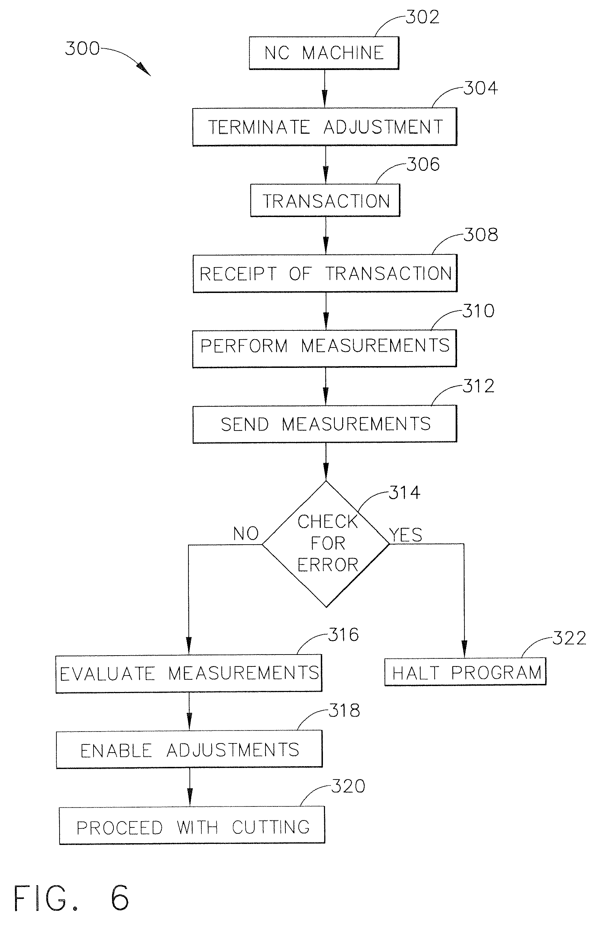

A specific embodiment of a method that uses system 10 for verifying the correct selection of a machining tool is illustrated by a flowchart shown in FIG. 6, with the method/system being indicated generally as 300. Machining tool program 36 associated with machine 18 may initially position and/or orient tool 26, as indicated by step 302, and then terminate the positioning/orientation adjustment, as indicated by step 304. A transaction 40 (which may include a transaction ID, known tool characteristics, identity of tool, etc.) containing the characteristics and measurements of tool 26 that are to be obtained is transmitted to smart camera 34, as indicated by step 306. Smart camera 34 receives transmitted transaction 40, as indicated by step 308, and performs the measurements of the characteristics contained in transaction 40, as indicated by step 310, to obtain acquired data 46.

As further shown in FIG. 6, acquired data 46 is transmitted to tool program 36, as indicated by step 312, where the acquired data 46 may be checked by tool program 36 for an error code, as indicated by step 314. If there is no error code discovered in step 314, the acquired data may be evaluated, etc., by tool program 36, as indicated by step 316, and then used by tool program 36 to control the operation of machine 18, for example, by initially making required adjustments to the position and/or orientation of tool 26, as indicated by step 318. After adjustments are made in step 318, machine 18 may then proceed to have tool 26 perform a machining operation, for example, cutting, as indicated by step 320.

If an error message is discovered in step 314 as part of acquired data 46, tool program 36 may halt or terminate, the use of tool 26 and the operation of machine as indicated by step 322, until the discovered error is corrected or otherwise resolved appropriately.

While FIG. 6 shows an illustrative embodiment of method/system 300, it should be understood that the order/sequence of steps may be deleted, changed, altered, modified, etc., as needed, and that additional steps (e.g., re-measurements, etc.) may also be included in method/system 300.

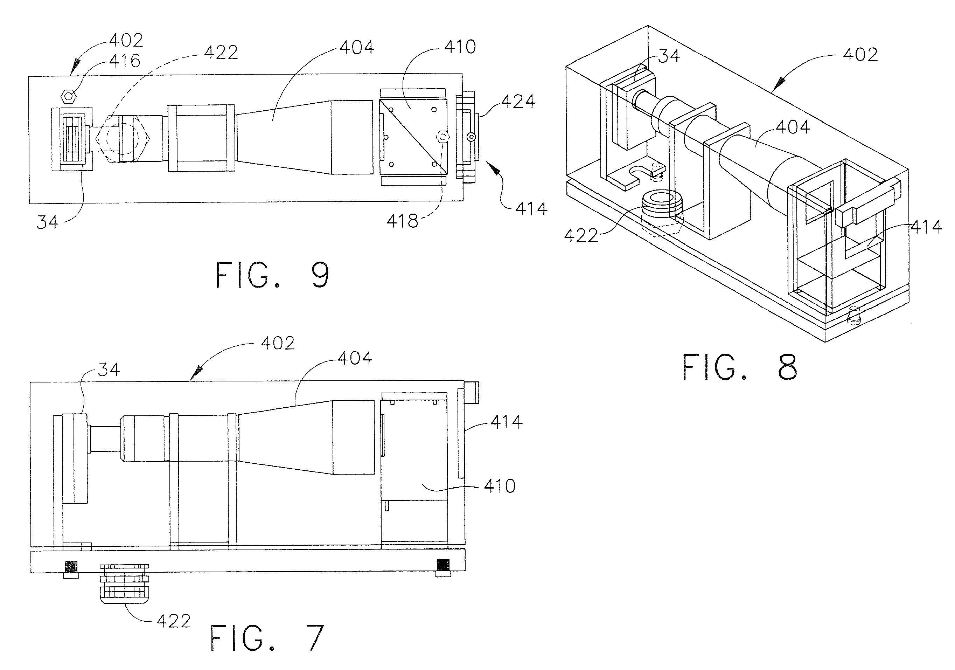

An embodiment of a smart camera 34 and associated components that may be used herein is illustrated in FIGS. 7-9. As illustrated in FIGS. 7-9, smart camera 34 may be enclosed within a sealed case 402 to protect smart camera 34 and lens 404 thereof from environmental contaminants that might degrade components of smart camera 34. The camera 34 may mounted, for example, on 3-point mounting plate which may move within a horizontal and/or vertical slot (not shown) in the bottom of case 402 to provide the ability to adjust the mounting angle and position of smart camera 34. A light 410 may be positioned between window 414 and lens 404 to provide illumination for smart camera 34. An air inlet 416 may be positioned proximate smart camera 34 for providing air flow to cool the area enclosed by case 402. To help maintain the desired temperature environment within case 402, heat generated by light 410 may also be expelled through air outlet 418. As may be seen in FIG. 8, a conduit 422 may be provided in case 402 for access to smart camera 34 and the other components within case 402. An air curtain 424 may also be positioned in front of window 414 to keep debris and other foreign objects off of window 414.

While specific embodiments of the system and method of this invention have been described, it will be apparent to those skilled in the art that various modifications thereto can be made without departing from the spirit and scope of this invention as defined in the appended claims.

### PARTS LIST

- 10: System
- 18: NC machine
- 26: Cutting tool
- 34: Smart camera
- 36: Machine tool program
- 38: Arrow indicating initiation of transaction 40
- 40: Transaction
- 42: Arrow indicating transmission of transaction 36 to smart camera 34
- 44: Double headed arrow indicating image(s) taken by camera 34
- 46: Arrow indicating transmission of acquired data
- 50: Arrow indicating control/determination by tool program 48
- 52: Field of view in FIG. 2
- 54: Top side of tool 26
- 56: Bottom side of tool 26
- 62: Tool axis target plane
- 64: Tool axis
- 66: Length target plane
- 68: Horizontal line
- 70: Control point distance
- 72: Angle of presentation
- 74: Diameter distance
- 76: Effective radius plane
- 78: Tool axis location deviation
- 80: Control point
- 84: Corner radius
- 86: Length Offset
- 90: Tool diameter
- 92: Effective diameter
- 96: Tool angle deviation
- 100: End mill of FIG. 4
- 102: Angled tip surface
- 103: Control point
- 104: Tool axis
- 106: Tip angle length
- 108: Tip angle
- 110: Intersection point
- 112: Bottom side of tool
- 114: Top side of tool
- 120: Field of view in FIG. 5
- 122: Top side
- 124: Bottom Side
- 126: Tool of FIG. 5
- 128: Tool axis
- 130: Control point
- 132: Angle of presentation

- 134: Horizontal line
- 150:
- 152: Tool radius target plane
- 154: Length target plane
- 156: Radial deviation
- 160: Control point distance
- 162: Radius distance
- 168: Effective radius plane
- 174: Corner radius
- 176: Length Offset
- 190: Actual tool radius
- 192: Corner radius tip
- 300: System
- 302: NC machine
- 304: Terminate tool program positioning/orientation adjustment
- 306: Transaction
- 308: Receipt of transactions
- 310: Perform measurements
- 312: Send measurements
- 314: Check for error
- 316: Evaluate measurements
- 318: Enable adjustments
- 320: Proceed with cutting
- 322: Halt procedure
- 402: Sealed case
- 404: Lens
- 410: Light
- 414: Window
- 416: Air inlet
- 418: Air outlet
- 422: Conduit
- 424: Air curtain

## Claims

1. A system (10) comprising:
an NC machine (18) having at least one machining tool (26); and
a smart image acquisition device (34) that measures at least one relevant characteristic of the machining tool (26) to provide acquired data (46) on the measured machining tool (26).

2. The system (10) of claim 1, which further comprises a machining tool program (36) that evaluates the acquired data (46) to control the operational use (50) of the measured machining tool (26) by the NC machine (18) or to determine the operational condition (50) of the measured machining tool (26) or the NC machine (18).

3. The system (10) of any of claims 1 to 2, wherein the smart image acquisition device comprises a smart camera (34).

4. The system of any of claims 1 to 3, wherein the at least one machining tool (26) comprises a mill (26, 100, 126).

5. A method (300) comprising the following steps:
(a) providing a machining tool (16) from an NC machining operation (302-304); and
(b) measuring at least one relevant characteristic of the machining tool (26) with a smart image acquisition device (46) to provide acquired data (46) on the measured machining tool (26) (308-310).

6. The method (300) of claim 5, which comprises the further step (c) of using the acquired data (46) to control the operational use (50) of the measured machining tool (26) by the NC machining operation (302-304) or to determine the operational condition (50) of measured machining tool (26) or NC machine (18) (312-320).

7. The method (300) of any of claims 5 to 6, wherein the smart image acquisition device (34) has a field of view (52, 120) and wherein the machining tool (26, 126) is positioned partially or fully within the field of view (52, 120) during step (b) when the at least one relevant characteristic of the machining tool (26) is measured (310).

8. The method (300) of any of claims 5 to 7, wherein step (b) is carried out in response to a transaction (40) transmitted to the smart image acquisition device (34) (306).

9. The method (300) of any of claims 6 to 8, wherein the machining tool program (36) during step (c) evaluates the acquired data (46) to verify whether or not the measured machining tool (26) is the correct machining tool (26) for the NC machining operation to use (314-318).

10. The method (300) of any of claims 6 to 9, wherein the machining tool program (36) during step (c) evaluates the acquired data (46) to determine whether or not the measured machining tool or the NC machine requires repair or maintenance (314-318).
